# EUROPÄISCHE PATENTSCHRIFT

(11) **EP 1 858 743 B1**
(45) Veröffentlichungstag und Bekanntmachung des Hinweises auf die Patenterteilung: **05.11.2008**
(21) Anmeldenummer: 06761688.8
(22) Anmeldetag: 22.06.2006
(51) Int. Cl.: B62B 3/14

(54) **EINKAUFSWAGENSORTIMENT**
GROUP OF SHOPPING TROLLEYS
ENSEMBLE DE CHARIOTS DE SUPERMARCHE

(30) Priorität: 25.06.2005 DE 102005029581; 07.07.2005 DE 102005031763; 29.11.2005 DE 102005056799
(43) Veröffentlichungstag der Anmeldung: 28.11.2007
(73) Patentinhaber: Eberlein, Herbert, 89347 Bubesheim (DE)
(72) Erfinder: Eberlein, Herbert, 89347 Bubesheim (DE)
(86) Internationale Anmeldenummer: PCT/DE2006/001067
(87) Internationale Veröffentlichungsnummer: WO 2007/000143

(56) Entgegenhaltungen:
- EP-A2- 0 125 569
- EP-A2- 1 093 987
- DE-A1- 19 824 368
- DE-A1- 19 926 424
- DE-U1- 20 209 597
- DE-U1- 20 318 769
- DE-U1- 29 907 769
- GB-A- 2 383 307

## Beschreibung

Die Erfindung betrifft ein Einkaufswagensortiment, gebildet durch wenigstens zwei unterschiedliche Einkaufswagen, die jeweils ein Fahrgestell und einen vom Fahrgestell getragenen Korb aufweisen, wobei gleiche Einkaufswagen in Reihen so abstellbar sind, dass sowohl deren Körbe als auch deren Fahrgestelle teilweise ineinander geschoben sind, wobei ferner wenigstens ein unterhalb des Korbbodens und außerhalb der Korbseitenwände befindliches Verbindungsmittel vorgesehen ist, das Verbindungsstellen aufweist, die im Zuge eines Montagevorganges ein ortsfestes Befestigen eines Korbes auf einem Fahrgestell erlauben.

Es sind Einkaufswagensortimente bekannt; bei denen sich auf ein und dasselbe Fahrgestell wahlweise Körbe aufsetzen lassen, die sich in ihrer Länge und/oder in ihrer Höhe unterscheiden. Umgekehrt ist es möglich, für gleiche Körbe unterschiedlich lange und/oder unterschiedliche hohe Fahrgestelle vorzusehen. Die Art der Verbindungsmittel und deren Anordnung ist dabei so gewählt, dass gemeinsame Verbindungsstellen entstehen, die sich zumindest teilweise immer an den Seitenwänden der Körbe befinden.

Das deutsche Gebrauchsmuster DE 299 07 769 U1, welches als nächtstliegender stand der Technik angesehen wird, beschreibt einen stapelbaren Einkaufswagen, bei dem als Verbindungsmittel ein zwischen dem Fahrgestell und dem Korb befindliches Zwischenstück vorgesehen ist, an dessen unterem Bereich jene Verbindungsmittel vorgesehen sind, die sich in bekannter Weise auch an den Seitenwänden des Korbes befinden und im oberen Bereich des Zwischenstückes wiederum solche Verbindungsmittel angeordnet sind, die sich in bekannter Weise auch am Fahrgestell befinden. Gilt es nun, Einkaufswagen herzustellen, bei denen der Korb relativ niedrig ausgebildet ist, genügt es, das vorab beschriebene Zwischenstück zu verwenden, welches dadurch den niedrigen Korb höher anordnet, so dass sich die Schiebeeinrichtung weiterhin auf einer für den Benutzer des Einkaufswagens geeigneten Höhe befindet. Will man beim gleichen Fahrgestell einen relativ hohen Korb verwenden, wird man auf das Zwischenstück verzichten, da sich die Schiebeeinrichtung, bedingt durch die größere Höhe des Korbes, dann ohnehin auf der geeigneten Höhe befindet.
Bei beiden Einkaufswagen, die zusammen ein Einkaufswagensortiment bilden, befindet sich zumindest ein Teil der Verbindungsmittel immer an den Seitenwänden der Körbe. Auch bei dieser Lösung werden die Seitenwände als Mittel zur Befestigung der Körbe auf den Fahrgestellen benutzt. Das Zwischenstück selbst entpuppt sich als kostenintensives Bauteil, da es Teile aufweist, die auch am Korb und am Fahrgestell vorgesehen werden müssen. So sind allein vier als Stanzteile ausgebildete Schienen erforderlich, die paarweise am Fahrgestell und paarweise am Zwischenstück angeschweißt werden müssen. Im Sinne einer kostengünstigen Fertigung solcher Einkaufswagen sind Zwischenstücke dieser Art nicht ideal.

In der britischen Patentanmeldung GB 2 383 307 A wird ein für eine rollstuhlfahrende Person bestimmter, an einem Rollstuhl befestigbarer Einkaufswagen beschrieben, dessen Korb um eine senkrechte Achse drehbar gelagert ist. Die drehbare Lagerung des Korbes wird durch ein den Korb mit dem Fahrgestell verbindendes, bewegbares Verbindungsmittel ermöglicht, das als Kugellager gestaltet ist. Das Kugellager befindet sich zwischen dem Korbboden und dem Fahrgestell. Der Korb dieses Einkaufswagens ist zylindrisch gestaltet, so dass es für eine rollstuhlfahrende Person möglich ist, durch Drehen des Korbes, den Korb an verschiedenen Stellen zu beladen. In der genannten Patentanmeldung wird auch darauf verwiesen, dass anstelle eines zylindrischen Korbes auch ein Korb herkömmlicher Bauart Verwendung finden kann, so dass dieser Korb ebenfalls drehbar am Fahrgestell befestigt ist. Die genannte Patentanmeldung vermittelt keinerlei Hinweise, über die Art des doch relativ schwierigen Montagevorganges, der erforderlich ist, um den Korb mit Hilfe eines Kugellagers mit dem Fahrgestell verbinden zu können. Auch vermisst man bei besagter Patentschrift eine Aussage darüber, ob deren Körbe und Fahrgestelle ineinander geschoben werden können. Schließlich findet man keinerlei Anregung, wie aus den eben beschriebenen Einkaufswagen ein Einkaufswagensortiment der eingangs beschriebenen Gattung gebildet werden könnte.

In der europäischen Patentanmeldung EP 1 093 987 A2 sind Einkaufswagen beschrieben, deren Verbindungsmittel durch zwei an der Unterseite des Korbbodens angeschweißte U-förmige Bügel und durch am Fahrgestell angeschweißte Einhänge- und Befestigungsösen gebildet sind. Zum Befestigen eines Korbes an einem Fahrgestell werden die vier U-förmigen Bügel an den Einhängeösen eingehängt und anschließend an den Befestigungsösen mit Hilfe von separaten Befestigungsmitteln gegen Lösen gesichert. Diese Art der Befestigung eines Korbes am Fahrgestell eines Einkaufswagens erfordert zwei U-Bügel, vier Einhängeösen, vier Befestigungsösen sowie mindestens vier weitere Befestigungsmittel, so dass die so gestaltete Anordnung als äußerst teileaufwendig und daher als teuer zu betrachten ist. Da Einkaufswagen als Massenprodukte einzustufen sind, summiert sich jede noch so kleine Kostenerhöhung in der Masse als nicht zu akzeptierender Kostenfaktor. Wie bereits zur vorab beschriebenen britischen Patentschrift angemerkt, findet man auch bei der EP 1 093 987 A2 keinerlei Hinweise oder Vorschläge, wie aus den beschriebenen Einkaufswagen ein Einkaufswagensortiment gebildet werden könnte, das dem eingangs genannten Sortiment entspräche.

Unabhängig vom eben geschilderten Stand der Technik, und allein schon aus Gründen einer Kostenreduzierung ist jeder Hersteller von Einkaufswagen bestrebt, die Vielfalt unterschiedlicher Körbe und/oder unterschiedlicher Fahrgestelle begrenzt zu halten. Andererseits kennt man die Wünsche der Marktketten, wonach letztere ihre im Einsatz befindlichen Einkaufswagen exakt ihrem Marketingkonzept angepasst wissen wollen, was bis zum heutigen Tag zur Entwicklung unterschiedlichster Einkaufswagenformen geführt hat. Die Folge ist, dass die Hersteller von Einkaufswagen im Grunde viel zu viele Einkaufswagentypen bereit halten müssen, um im Markt bestehen zu können.
Hinzu kommt, dass aus einem Untergestell und einem Korb zusammengesetzte Einkaufswagen im Zuge der Wartung nur den Ersatz von Körben und/oder von Fahrgestellen erlauben, die vom gleichen Hersteller stammen und damit in der jedem Hersteller eigenen Gestaltung ihrer Verbindung übereinstimmen. Es werden somit die Möglichkeiten der Marktketten einschränkt,
- Körbe und/oder Fahrgestelle ungebunden vom jeweiligen Hersteller zu beziehen oder
- Körbe und/oder Fahrgestelle mit unterschiedlich langer, jeweils zweckmäßiger Qualität und Lebensdauer bauen zu lassen oder
- im Rahmen konzeptioneller Änderungen statt ganzer Einkaufswagen nur die Körbe oder die Fahrgestelle zu tauschen oder schließlich
- nicht mehr benötigte Körbe oder Fahrgestelle jederzeit an Wartungsunternehmen oder an sonstige Verwerter dieser Teile zu verkaufen.

Die Folge ist, dass in der Summe der genannten Einschränkungen die gesamten durch den Einsatz von Einkaufswagen entstehenden Anschaffungs-, Instandhaltungs-, Wiederverwertungs- und Entsorgungskosten auf hohem, wesentlich durch den Hersteller bestimmtem Niveau verharren. Dies macht sich für die Marktketten permanent in nachteiliger Weise durch höhere Kosten bemerkbar.

Ausgehend vom eingangs beschriebenen Stand der Technik und ausgehend von den eben geschilderten Sachverhalten besteht die Aufgabe der Erfindung darin, Einkaufswagensortimente der gattungsgemäßen Art so weiter zu entwickeln, dass bei einer Reduzierung der Herstellkosten, vorzugsweise auch der Wartungs-, der Wiederverwertungs-, und der Entsorgungskosten, trotzdem eine Steigerung der Anzahl der unterschiedlichen Einkaufswagen möglich ist und dass für Marktketten die Möglichkeit besteht, unabhängig vom jeweiligen Hersteller, aus einer Vielzahl von Körben und Fahrgestellen neue Einkaufswagen und damit entsprechend neue Einkaufswagensortimente erstellen, konfigurieren oder verändern zu können.

Die Lösung der Aufgabe besteht darin, dass sich die unterschiedlichen Einkaufswagen zumindest durch die unterschiedliche Breite ihrer Körbe oder alternativ zumindest durch die unterschiedliche Breite ihrer Fahrgestelle unterscheiden und dass die Anordnung wenigstens der mit dem Korb korrespondierenden Verbindungsstellen, oder alternativ zumindest der mit dem Fahrgestell korrespondierenden Verbindungsstellen bei allen Einkaufswagen gleich ist.

Mittels der vorgeschlagenen Lösung können nun in vorteilhafter und kostengünstiger Weise Fahrgestelle und Körbe Verwendung finden, die sich nicht nur, wie bisher, in ihrer Länge und ihrer Höhe, sondern auch noch in ihrer Breite unterscheiden, so dass sich die Anzahl unterschiedlicher Einkaufswagen innerhalb eines Einkaufswagensortimentes entscheidend erhöhen lässt. Der nachfolgend angestellte Vergleich lässt diesen ersten Vorteil der aufgefundenen Lösung gegenüber dem Stand der Technik erkennen.

Stand der Technik: Es liegen vor:
- ein einziger Fahrgestelltyp in vier Exemplaren sowie jeweils
- ein dazu passender niedriger und langer Korb;
- ein dazu passender niedriger und kurzer Korb;
- ein dazu passender hoher und langer Korb;
- ein dazu passender hoher und kurzer Korb.

Man erhält ein Einkaufswagensortiment, das durch vier unterschiedliche Einkaufswagen gebildet ist.

Gemäß der Erfindung liegen nunmehr vor:
- der gleiche Fahrgestelltyp in acht Exemplaren sowie jeweils
- ein dazu passender schmaler, niedriger und langer Korb;
- ein dazu passender schmaler, niedriger und kurzer Korb;
- ein dazu bestimmter schmaler, hoher und langer Korb;
- ein dazu passender schmaler, hoher und kurzer Korb;
- ein dazu passender breiter, niedriger und langer Korb;
- ein dazu passender breiter, niedriger und kurzer Korb;
- ein dazu passender breiter, hoher und langer Korb;
- ein dazu passender breiter, hoher und kurzer Korb.
Man erhält ein Einkaufswagensortiment, das durch acht unterschiedliche Einkaufswagen gebildet ist, was bei der Verwendung von immer gleichen Fahrgestellen eine Steigerung von 100% bedeutet.
Nachdem sich Einkaufswagen in der Regel durch ihr unterschiedliches Korbvolumen unterscheiden und das Fahrgestell im Grunde nur dazu da ist, um den Einkaufswagen bewegen zu können, ergibt sich aufgrund dieser Tatsache ein weiterer ganz entscheidender Vorteil, der darin besteht, dass sich durch die erfindungsgemäße Idee bevorzugt Einkaufswagensortimente bilden lassen, bei denen der Anteil der unterschiedlichen Körbe größer ist als der Anteil der unterschiedlichen Fahrgestelle. Bezüglich einer rationellen und kostengünstigen Einkaufswagenfertigung erweist sich dieser Umstand als äußerst zweckmäßig, da die wenigen erforderlichen unterschiedlichen Fahrgestellarten im Sinne der Einkaufswagenhersteller nunmehr in wesentlich größeren Stückzahlen und somit billiger herstellbar sind. Selbst wenn die Anzahl der unterschiedlichen Korbtypen letztendlich größer wird, lassen sich durch die immer gleiche Gestaltung der Verbindungsmittel und durch die immer gleiche Anordnung der Verbindungsstellen trotzdem die Herstellkosten entscheidend reduzieren. Auch die bei der betrieblichen Montage der Einkaufswagen entstehenden Montagekosten lassen sich erheblich verringern, wenn die Verbindungsmittel und die Verbindungsstellen bevorzugt so ausgebildet sind, dass sich die Körbe rastschlüssig auf die Fahrgestelle aufsetzen lassen, ohne dass weitere Befestigungsmittel erforderlich sind.

Die durch die erfinderische Lösung erzielte Standardisierung der Art der Verbindung zwischen Körben und Fahrgestellen erweist sich, um den dritten Vorteil der Erfindung zu nennen, auch für die Marktketten als äußerst kostengünstig und zweckmäßig. Nunmehr ist es für die Marktketten möglich, bezogen auf den jeweils vorgesehenen Einsatzort der Einkaufswagen, und damit der Einkaufswagensortimente, nicht nur den jeweils günstigsten Hersteller von Körben und Fahrgestellen auszusuchen, es können auch die preislich günstigste Montagefirma und/oder die kostengünstigste Serviceleistungsfirma ausgewählt werden. Konkret bedeutet dies, dass Körbe und Fahrgestelle, und wahlweise auch weitere Teile, ohne mit hohen Transportkosten oder Einfuhrabgaben belastet zu sein, von den Marktketten am jeweils günstigsten Ort gekauft werden können und sich die Montage, sowie die sich später anschließenden Serviceleistungen, kosteneffizienter durchführen lassen. Dies wirkt sich keineswegs zum Nachteil der Hersteller aus. Vielmehr kann sich nun jeder Hersteller unter Wegfall der Notwendigkeit, einen kompletten Einkaufswagen aus einer lokalen Fertigung heraus weltweit liefern zu müssen, auf seine jeweiligen Stärken konzentrieren, verbunden mit der Chance, ausgewählte Teile mit jeweils zweckmäßiger Qualität und Lebensdauer zu bauen, um in der Spezialisierung eine verbesserte Ertragssituation zu erreichen.

Sollte es erforderlich sein, den Verwendungszweck der Fahrgestelle aufzuwerten und die Nutzbarkeit verschieden großer Körbe eher als zweitrangig zu betrachten, so lässt die Erfindung in kostengünstiger Weise auch Einkaufswagensortimente entstehen, bei denen der Anteil der Fahrgestelle größer ist als der entsprechende Anteil der Körbe.

Die Erfindung wird anhand von Ausführungsbeispielen näher erläutert. Es zeigen
- Fig. 1 bis Fig. 5,: Einkaufswagen in Seitenansicht mit unterschiedlichen Verbindungsmitteln. Es zeigt ferner als geeignete Ausführungsbeispiele
- Fig. 6: in einer Draufsicht drei, ein Einkaufswagensortiment bildende unterschiedliche Einkaufswagen mit gleichen Verbindungsmitteln;
- Fig. 7: ein aktuelles Ausführungsbeispiel in Rückansicht;
- Fig. 8: dasselbe Ausführungsbeispiel von oben betrachtet;
- Fig. 9: in einer Schnittdarstellung eine Möglichkeit, einen Korb mit Hilfe eines einzigen Verbindungsmittels an einem Fahrgestell zu befestigen;
- Fig. 10: ein Ausführungsbeispiel mit einem rastschlüssig auf ein Fahrgestell aufgesetztem Korb sowie
- Fig. 11: zwei platzsparend ineinander geschobene Einkaufswagen.

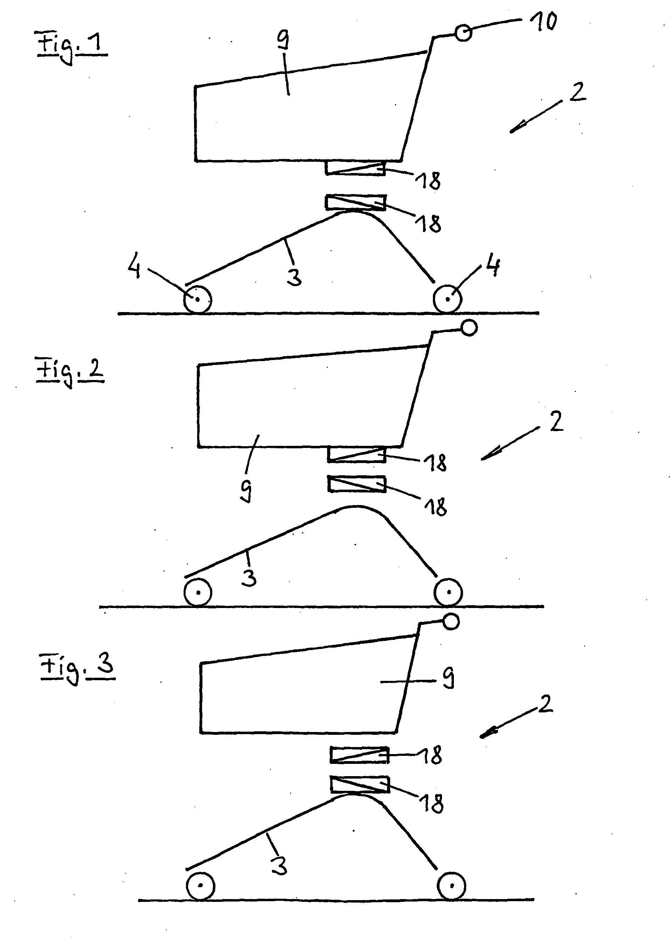

Im Sinne einer Abstrahierung der nachfolgend dargestellten Ausführungsbeispiele weisen die gezeigten Fahrgestelle 3 und Körbe 9 der Einkaufswagen 2 immer die gleiche gestalterische Grundform auf. Die Erfindung lässt selbstverständlich eine Vielfalt unterschiedlich ausgebildeter Fahrgestelle 3 und Körbe 9 zu. Auch das wenigstens eine Verbindungsmittel 18, das ganz allgemein eine Verbindungseinrichtung bildet, ist der Einfachheit halber in den Zeichnungen Fig. 1 bis 5 schematisch in ein- oder zweiteiliger Blockform dargestellt, wobei Verbindungsmittel 18 der unterschiedlichsten Art Verwendung finden können. Man denke nur an Streben, Platten, Stege, Zapfen, Bolzen, Stifte usw., die von Fall zu Fall mit Hinterschneidungen oder Vorsprüngen, mit Löchern oder Durchbrüchen ausgestattet sind und/oder Verrastungen bilden. Alle Verbindungsmittel 18, die üblicherweise aus Metall oder aus Kunststoff oder aus beidem gebildet sind, lassen gemeinsame Verbindungsstellen 23 entstehen, die eine ortsfeste, üblicherweise bei Bedarf wieder lösbare Verbindung zwischen einem Fahrgestell 3 und einem Korb 9 eines Einkaufswagens 2 bilden. Die hier beschriebenen Einkaufswagen 2 sind in bekannter Weise so gestaltet, dass sie sich in gleiche Einkaufswagen 2 platzsparend einschieben lassen.
Bei den nachfolgenden Darstellungen (Fig. 1 bis Fig. 5) sind die mit Fahrrollen 4 ausgestatteten Fahrgestelle 3, die gewöhnlich einen Schiebegriff 10 tragenden Körbe 9 sowie die dazu erforderlichen Verbindungsmittel 18 voneinander abgesetzt, also im zu montierenden Zustand dargestellt. In den Beispielen werden die Körbe 9, die bekannterweise und bevorzugt aus einem Korbkörper mit daran bewegbar angeordneter hinterer Verschlussklappe bestehen, von oben her auf die Fahrgestelle 3 aufgesetzt. Im Sinne der Erfindung sind natürlich auch andere Montageformen denkbar. So ist es durchaus möglich, den Korb 9 in einer Art horizontaler Längsbewegung auf das Fahrgestell 3 aufzuschieben, sofern die Verbindungsmittel 18 entsprechend gestaltet sind.

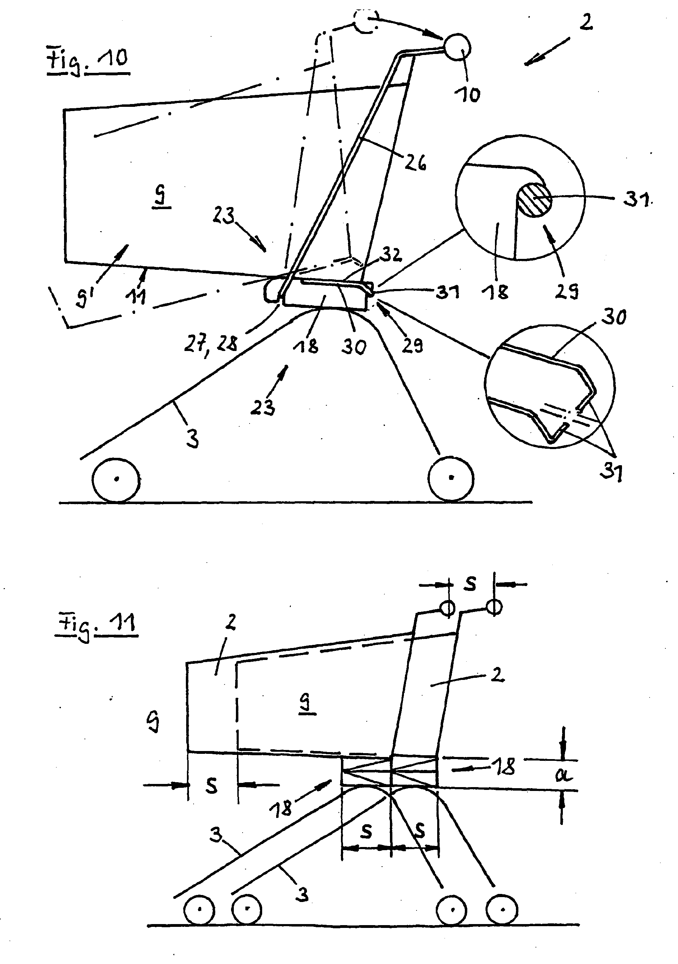

Fig. 1 zeigt ein Fahrgestell 3 und einen Korb 9 mit jeweils am Korb 9 und am Fahrgestell 3 ortsfest angeordneten Verbindungsmitteln 18. Das Fahrgestell 3 und der Korb 9 bilden in montiertem Zustand einen Einkaufswagen 2, wie auch in Fig. 2 bis Fig. 5 dargestellt. Für diese Lösung bieten sich z. B. Einkaufswagen 2 an, deren Fahrgestelle 3 und deren Körbe 9 aus Kunststoff gefertigt sind und die Verbindungsmittel 18 zusammen mit geeigneten Verbindungsstellen 23 jeweils am Fahrgestell 3 und am Korb 9 angeformt sind. Auch das nachfolgend näher beschriebene Ausführungsbeispiel entsprechend Fig. 10 kann zu dieser Art von Einkaufswagen 2 gerechnet werden.

Fig. 2 vermittelt ein Fahrgestell 3 und einen Korb 9, wobei das oder die Verbindungsmittel 18 am Fahrgestell 3 aufsteckbar, die Verbindungsmittel 18 hingegen am Korb 9 ortsfest angeordnet sind. Als praktisches Ausführungsbeispiele bieten sich Einkaufswagen 2 an, deren Körbe 9 aus Kunststoff bestehen, an welchen geeignete Verbindungsmittel 18 angeformt sind.

Fig. 3 offenbart ein Fahrgestell 3 mit daran ortsfest angeordneten Verbindungsmitteln 18, während die Verbindungsmittel 18 am Korb 9 aufsteckbar sind. Bei diesem Ausführungsbeispiel bestehen die Fahrgestelle 3 aus Kunststoff, wobei an den Fahrgestellen die Verbindungsmittel 18 angeformt sind.

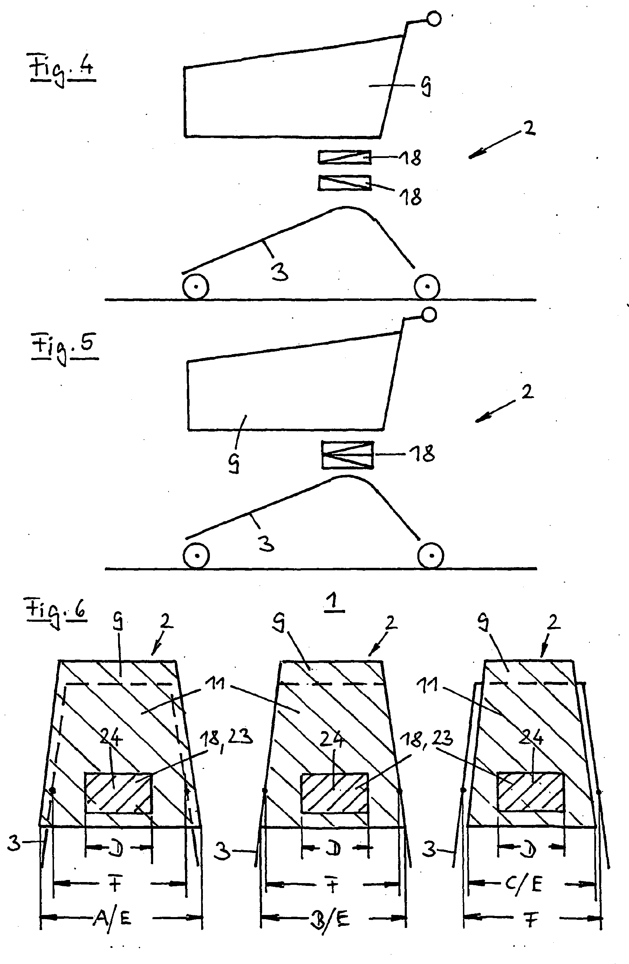

Fig. 4 lässt erkennen, dass auch Einkaufswagen 2 möglich sind, bei denen die Verbindungsmittel 18 sowohl am Fahrgestell 3 als auch am Korb 9 aufsteckbar gestaltet sind. Bei der Montage derartiger Einkaufswagen 2 greifen die jeweiligen Verbindungsmittel 18 ineinander, so dass die Körbe 9 mit den Fahrgestellen 3 bevorzugt rastschlüssig verbunden sind.

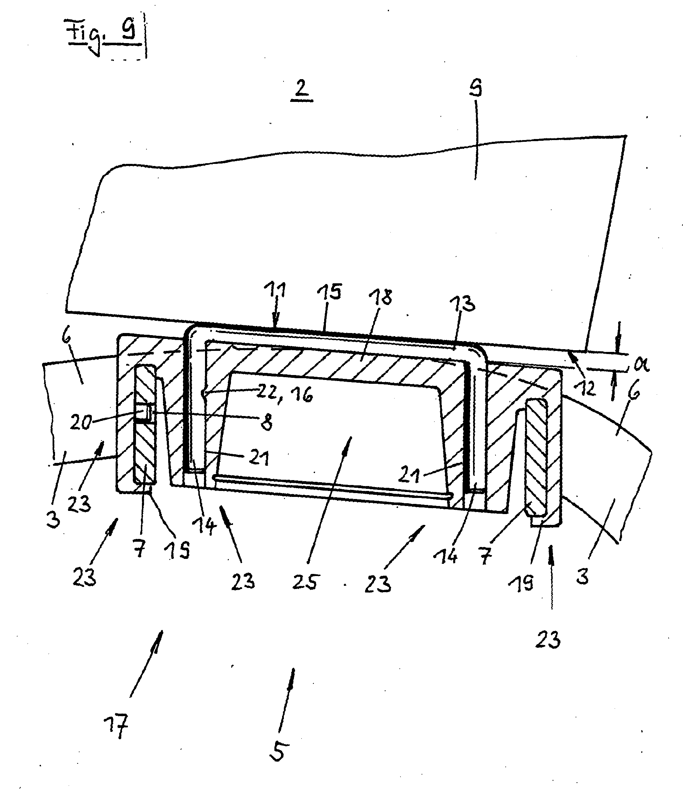

Fig. 5 zeigt, dass es möglich ist, die Verbindung zwischen dem Fahrgestell 3 und dem Korb 9 mit Hilfe eines einzigen Verbindungsmittels herzustellen, das sowohl mit dem Korb 9 als auch mit dem Fahrgestell 3 lösbar oder aufsteckbar verbunden ist. Das nachfolgend beschriebene Ausführungsbeispiel gemäß Fig. 9 kann in diese Kategorie eingestuft werden.

In einer Draufsicht zeigt Fig. 6 ein Einkaufswagensortiment 1, das der Einfachheit halber aus lediglich drei unterschiedlichen Einkaufswagen 2 besteht. Das Fahrgestell 3 ist bei allen drei Einkaufswagen 2 gleich. Hingegen ist der Korb 9 bei jedem der Einkaufswagen 2 unterschiedlich breit gestaltet, vgl. Maße A, B und C. Bei jedem Einkaufswagen 2 ist ein Flächenabschnitt 24 eingezeichnet, in dem sich das wenigstens eine Verbindungsmittel 18 und die dadurch gebildeten gemeinsamen Verbindungsstellen 23 befinden. Die Verbindungsstellen 23 liegen dabei von oben betrachtet innerhalb des Flächenabschnittes 24, der schmäler ist (Maß D) als die maximale Breite E des üblicherweise trapezförmig gestalteten Korbbodens 11 und bevorzugt schmäler ist als die auf Höhe des Flächenabschnittes 24 gemessene Breite F des Fahrgestelles 3. Die Zeichnung zeigt klarstellend die durch Schraffur gekennzeichnete Grundfläche des trapezförmigen Korbbodens 11. Die Grundfläche des Korbbodens 11 beinhaltet nicht die Seitenwände 9' des Korbes 9. Bei den dargestellten Einkaufswagen 2 erkennt man, dass beim links dargestellten Einkaufswagen 2 die Breite des Korbes 9 größer ist als die auf Höhe des Flächenabschnittes 24 gemessene Breite des Fahrgestelles 3. Beim mittleren dargestellten Einkaufswagen 2 sind die entsprechend gemessenen Breiten von Fahrgestell 3 und Korb 9 gleich, während beim rechts dargestellten Einkaufswagen 2 der Korb 9 schmäler ist als die auf Höhe des Flächenabschnittes 24 gemessene Breite des Fahrgestelles 3. Es ist anhand dieses Beispieles leicht vorstellbar, dass jeder der gezeigten Körbe 9 auch unterschiedlich hoch und/oder auch unterschiedlich lang gestaltbar ist. Die Verbindungsmittel 18 und die Verbindungsstellen 23 sind bei allen Einkaufswagen 2 des Einkaufswagensortimentes 1 immer gleich, bevorzugt zentral, angeordnet. Mit einer einzigen Fahrgestellgröße lassen sich somit unterschiedlichste Einkaufswagen 2 herstellen, die mit bevorzugt unterschiedlichen Korbgrößen oder Korbinhalten ein Einkaufswagensortiment bilden.

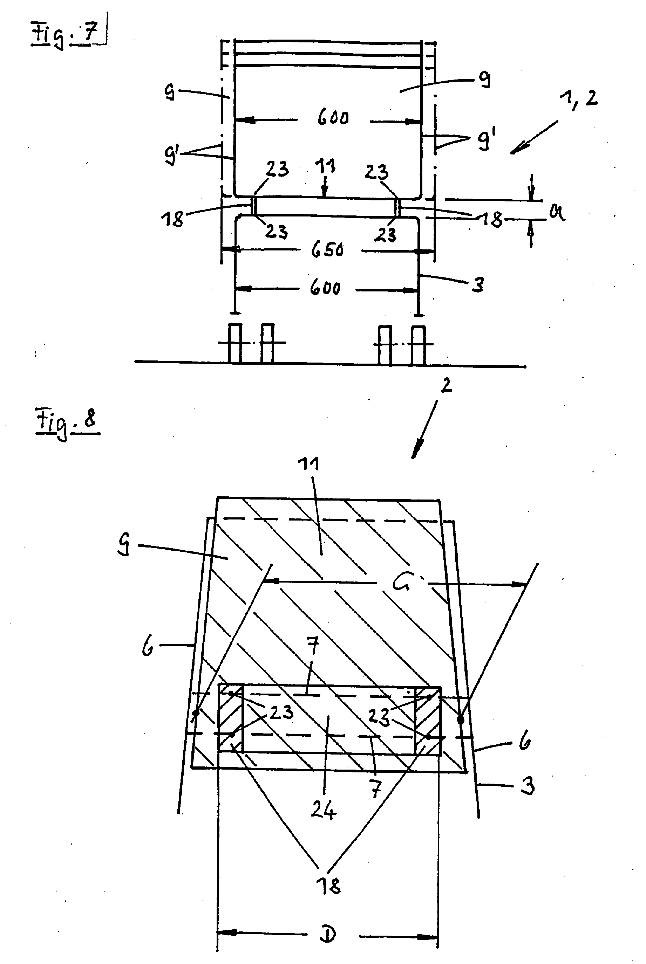

In vereinfachter Darstellung zeigt Fig. 7 in einer Rückansicht einen Einkaufswagen 2, bei dem zwei unterschiedlich breite Körbe 9 eingezeichnet sind. Der Nutzen der Erfindung wird anhand einer aktuellen Situation deutlich. Aufgrund einer gesetzlichen Vorgabe dürfen Einkaufswagen 2 in Frankreich höchstens 600mm breit sein, während zumindest im übrigen Europa eine maximale Breite von 650mm erlaubt ist. Die Zeichnung zeigt jeweils einen Einkaufswagen 2, die zusammen ein Einkaufswagensortiment 1 bilden. Man erkennt das mit 600mm Breite bemessene Fahrgestell 3, das zwei Verbindungsmittel 18 trägt. Die Art der Verbindung der beiden Verbindungsmittel 18 mit dem Korb 9 und dem Fahrgestell 3 kann entsprechend einem der in den Figuren 1 bis 5 beschriebenen Befestigungsmöglichkeiten gewählt sein. Jedenfalls ist die Anordnung zumindest der mit dem Korb 9 korrespondierenden Verbindungsstellen 23, von oben betrachtet, in Bezug zum Grundriss des Korbes 9 oder des Korbbodens 11 so gewählt, dass auf ein und dasselbe Fahrgestell 3 wahlweise Körbe 9 unterschiedlicher Breite aufsetzbar sind, wobei die Anordnung wenigstens der mit dem Korb 9 korrespondierenden Verbindungsstellen 23 bei beiden, und damit bei allen derartigen Einkaufswagen 2 gleich ist. Dies kommt in der Zeichnung dadurch zum Ausdruck, dass in durchgehenden Linien ein Korb 9 mit einer Breite von 600mm (Frankreich) eingezeichnet ist und dass mit strichpunktierten Linien ein Korb mit 650mm Breite (übriges Europa) dargestellt ist. Der Korb des zuletzt genannten Einkaufswagens steht zu beiden Seiten um 25mm über das Fahrgestell 3 vor. Das Einkaufswagensortiment 1 besteht hier aus mindestens zwei Einkaufswagen 2, die beide das gleiche Fahrgestell, jedoch unterschiedlich breite Körbe 9 aufweisen. Diese Lösung ist möglich, weil die Seitenwände 9' des Korbes 9 beider Einkaufswagen 2 nicht mehr mit den Verbindungsmitteln 18 zusammenwirken. Der Abstand der beiden Verbindungsmittel 18 zueinander ist kleiner als die jeweils maximale Breite der Körbe 9 und schmäler als die Breite des Fahrgestelles 3.
Alternativ zum eben beschriebenen Ausführungsbeispiel ist es anhand der Zeichnung ohne weiteres vorstellbar, dass bei konstanter Breite des Korbes 9 unterschiedlich breite Fahrgestelle 3 Verwendung finden können, um ein aus wenigstens zwei unterschiedlichen Einkaufswagen 2 gebildetes Einkaufswagensortiment zu bilden. In diesem Falle ist die Anordnung zumindest der mit dem Fahrgestell 3 korrespondierenden Verbindungsstellen 23, von oben betrachtet, in Bezug zum Grundriss des Fahrgestelles 3 so gewählt, dass ein und derselbe Korb 9 wahlweise auf Fahrgestelle 3 unterschiedlicher Breite aufsetzbar ist, wobei die Anordnung wenigstens der mit dem Fahrgestell 3 korrespondierenden Verbindungsstellen 23 bei allen Einkaufswagen 2 gleich ist.
Anhand der Zeichnung ist ersichtlich, dass zwischen der obersten Begrenzung des Fahrgestelles 3 und dem Korbboden 11 ein Abstand a gebildet ist, was auch den Ausführungsbeispielen Fig. 9 und 11 entnommen werden kann.

Ergänzend zu Fig. 7 zeigt Fig. 8 das eben beschriebene Ausführungsbeispiel in einer Ansicht von oben. Man erkennt die beiden Verbindungsmittel 18, die in einem Abstand zueinander auf das Fahrgestell 3 aufgesetzt sind und auf welche wiederum der Korb 9 aufgesteckt ist. Die Verbindungsstellen 23 befinden sich, von oben betrachtet, innerhalb eines Flächenabschnittes 24, der schmäler ist als die größte, auf Höhe (oder im Bereich) des Flächenabschnittes 24 gemessene Breite G des Korbbodens 11. Im Beispiel befinden sich die Verbindungsstellen 23 auch komplett innerhalb der durch grobe Schraffur gekennzeichneten Grundfläche des Korbbodens 11. Es ist von Vorteil, die Verbindungsmittel 18 an zwei Querstreben 7 ortsfest oder aufsteckbar anzuordnen, welche üblicherweise die beiden Längsholme 6 des Fahrgestelles 3 im oberen Bereich 5 des Fahrgestelles 3 verbinden und ohnehin vorhanden sind. Jedes Verbindungsmittel 18 beansprucht somit zwei Querstreben 7 zu seiner Befestigung am Fahrgestell 3. Die in Fig. 7 und Fig. 8 beschriebenen maßlichen Zusammenhänge und technischen Merkmale sind auf jedes Einkaufswagensortiment 1 übertragbar.

Fig. 9 zeigt im Detail und in Schnittdarstellung den Verbindungsbereich 17 von Korb 9 und Fahrgestell 3 eines Einkaufswagens 2. Die hier vorgeschlagene Lösung ist nur eine von vielen denkbaren Gestaltungsmöglichkeiten. Die Lösung greift zurück auf das in Fig. 5 beschriebene Ausfiihrungsbeispiel. Die Zeichnung zeigt den oberen Bereich 5 des Fahrgestelles 3. Das Fahrgestell 3 weist in bekannter Weise zwei nach oben gekrümmte Längsholme 6 auf. Beide Längsholme 6 sind durch beispielsweise aus Flachstahl gebildete Querstreben 7 verbunden, siehe auch Fig. 8. Auf die beiden Querstreben 7 ist ein einziges aus Kunststoff bestehendes Verbindungsmittel 18 von oben her rast- oder schnappschlüssig so aufgesetzt, dass die beiden Querstreben 7 von am Verbindungsmittel 18 vorgesehenen Vorsprüngen 19 teilweise umgriffen werden. Zumindest eine der beiden Querstreben 7 ist mit wenigstens einer horizontal angeordneten Öffnung 8 ausgestattet, in welche mindestens ein am Verbindungsmittel 18 vorgesehener Zapfen 20 eingreift. Das Verbindungsmittel 18 nimmt somit eine vorbestimmte, nicht mehr veränderbare Lage ein. Das Verbindungsmittel 18 weist im Beispiel vier senkrecht angeordnete Durchbrüche 21 auf, die zur rast- oder schnappschlüssigen Aufnahme von vier Vorsprüngen bestimmt sind, die sich an der Unterseite 12 des Korbbodens 11 befinden. Die Vorsprünge 14 sind beispielsweise Bestandteil zweier U-förmig gestalteter Bügel 13, die sich an der Unterseite 12 des Korbbodens 11 befinden. Mit ihrem horizontalen Schenkel 15 liegen die Bügel 12, und damit der Korb 9, lagefixiert am Verbindungsteil 18 auf. Jeder Durchbruch 21 weist einen kleinen Vorsprung 22 auf, in dem jeweils eine an den Vorsprüngen 19 befindliche Vertiefung 16 eingerastet ist. Der Korb 9 ist somit mit dem Fahrgestell 3 mit Hilfe des Verbindungsmittels 18 ortsfest verbunden. Um die gezeigte Verbindung zu erzielen, wird zuerst das Verbindungsmittel 18 auf die beiden Querstreben 7 aufgesetzt. Anschließend wird der Korb 9 mit Hilfe seiner Vorsprünge 14 in die Durchbrüche 21 eingerührt und so weit nach unten gedrückt, bis sich die zwischen den Vorsprüngen 22 und Vertiefungen 16 erzielbare Verrastung eingestellt hat. Die ortsfeste Verbindung zwischen Korb 9 und Fahrgestell 3 ist somit hergestellt. Unter rast- oder schnappschlüssiger Verbindung wird hier ganz allgemein eine Verbindung zweier oder mehrerer Teile verstanden, die ohne zusätzliche Befestigungsmittel wie Schrauben, Muttern, Stifte und dergleichen auskommt
Wie aus der Zeichnung ersichtlich, sind gemeinsame Verbindungsstellen 23 zwischen den Querstreben 7 und den Vorsprüngen 19, zwischen der Öffnung 8 und dem Zapfen 20 sowie zwischen den vier Durchbrüchen 21 und den vier Vorsprüngen 14 gebildet. Alle Verbindungsstellen 23 befinden sich innerhalb des in Fig. 6 oder 8 beschriebenen Flächenabschnittes 24.
Die hier vorgeschlagene Lösung eröffnet neue Möglichkeiten. Gestaltet man das Verbindungsmittel 18 gehäuseartig, erhält man wenigstens einen etwa von unten oder von wenigstens einer Seite aus zugänglichen Raum 25, der beispielsweise zur Aufnahme von wenigstens einem die Funktion des Einkaufswagens 2 erweiternden Bauteil, beispielsweise von elektrischen und/oder elektronischen Bauteilen geeignet ist. Der Raum kann auch durch ein geeignetes Verschlussteil verschlossen sein, das sich beispielsweise zum Zwecke des Montierens oder des Auswechselns der elektrischen oder elektronischen Bauteile entfernen lässt. Gerade in jüngster Zeit finden immer mehr der vorab erwähnten Bauteile Verwendung bei Einkaufswagen 2. Sei es darum, dass man die Identität und Zugehörigkeit von Einkaufswagen 2 zu bestimmten Märkten sicherstellen will, sei es, dass man Diebstahl von Einkaufswagen 2 verhindern will oder sei es, die Länge von Reihen gestapelter Einkaufswagen 2 zu begrenzen. In all diesen Fällen sind immer die erwähnten Bauteile erforderlich. Da das Verbindungsmittel 18 aus Festigkeitsgründen relativ groß sein muß, ergibt sich auch zwangsläufig mindestens ein relativ großer Raum 25 zum Unterbringen dieser bevorzugt elektrischen und elektronischen Teile. Es lässt sich somit z. B. eine großzügige und damit zeitlich dauerhafte, aus Batterien gebildete Stromversorgung unterbringen, was bisher immer an Platzproblemen gescheitert ist. Das Unterbringen der elektrischen und elektronischen Bauteile bereitet ebenfalls keine Schwierigkeiten, da diese Bauteile aufgrund ihrer geringen Größe mittlerweile wenig Platz und Raum beanspruchen.
Es soll an dieser Stelle nicht unerwähnt bleiben, dass es natürlich möglich ist, anstelle von einem Verbindungsmittel 18, wie eben beschrieben, zwei Verbindungsmittel 18 vorzusehen, die beispielsweise spiegelbildlich gestaltet sind, quasi aus dem einzigen Verbindungsmittel 18 hervorgehen und ebenfalls Eigenschaften und technische Merkmale besitzen, die das vorab beschriebene aus Kunststoff bestehende einteilige Verbindungsmittel 18 aufweist. Jedes dieser Verbindungsmittel 18 besitzt beispielsweise zwei Durchbrüche 21 zur Aufnahme von zwei Vorsprüngen 14. Auch kann jedes der beiden Verbindungsmittel 18 mit einem weiteren Zapfen 20 ausgestattet sein, der zum Eingreifen in eine weitere Öffnung 8, die sich an der anderen Querstrebe 7 befindet, eingreifen. Die beiden Verbindungsmittel 18 lassen sich somit, bezogen auf das einteilige Verbindungsmittel 18, auf gleiche oder auf ähnliche Weise jeweils an zwei Querstreben 7 befestigen und sie befinden sich ebenfalls in dem bereits beschriebenen Flächenabschnitt 24, siehe als Beispiel Fig. 6 und/oder 8. Wenigstens eines der beiden Verbindungsmittel 18 weist wenigstens einen Raum 25 zur Aufnahme von mindestens einem, die Funktion des Einkaufswagens 2 erweiternden Bauteil auf.

Fig. 10 zeigt ein Ausführungsbeispiel, bei dem sich der Korb 9 mit Hilfe von wenigstens einem Verbindungsmittel 18 rastschlüssig auf ein Fahrgestell 3 eines Einkaufswagens 2 aufsetzen lässt. Am Fahrgestell 3 sind zwei auf Abstand gehaltene Verbindungsmittel 18 beispielsweise so angeschweißt oder befestigt, wie dies im Beispiel gemäß Fig. 7 vorgeschlagen ist. Jedes Verbindungsmittel 18 ist als ein hochkant angeordneter Steg gestaltet, wobei es sich auch anbietet, die beiden stegartigen Verbindungsmittel 18 an den beiden Querstreben 7, vgl. Fig. 8, anzuschweißen. Jedes Verbindungsmittel 18 weist an seinem vorderen Ende eine Einhängeöse 28 auf. Das hintere Ende eines jeden Einhängemittels 18 ist als Rastvertiefung 29 gestaltet. Ausgehend vom Schiebegriff 10 führt außen an beiden Seitenwänden 9' des Korbes 9 je ein Stababschnitt 26 nach unten und weiter nach unten über den Korbboden 11 hinaus. Anschließend sind beide Stababschnitt 26 rechtwinklig abgebogen und führen unterhalb des Korbbodens 11 zueinander, um beispielsweise einen einzigen Quersteg 27 zu bilden. Mit dem Quersteg 27 oder entsprechend gestalteten Vorsprüngen lässt sich der Korb 9 im Zuge eines Montagevorganges in die Einhängeösen 28 einhängen, so dass der Korb 9 eine erste vorfixierte Lage einnimmt. An der Unterseite des Korbbodens 11 ist ein U-förmiger Bügel 30 mit seinen Schenkeln 32 ortsfest angeordnet. Der Bügel 30, siehe Einzelheit, ist an seinem hinteren Ende schräg nach unten weisend abgewinkelt, so dass sich das Querstück 32 des Bügels 30 am weitesten unten befindet. Im Zuge des Montagevorganges wird der Korb 9 an beiden Verbindungsmitteln 18 mit Hilfe der Einhängeösen 28 vorfixiert und mit dem Schiebegriff 10 so weit nach unten gedrückt, bis das Querstück 31 des Bügels 30 an den Rastvertiefungen 29 der beiden Verbindungsmittel 18 einrastet, siehe weitere Einzelheit. In dieser Lage ist der Korb 9 mit Hilfe der Verbindungsmittel 18 rastschlüssig und ortsfest mit dem Fahrgestell 3 verbunden. Dabei liegen die Schenkel 32 des Bügels 30 und die beiden Stababschnitte 26 des Korbes 9 an den Außenseiten der Verbindungsmittel 18 an. Zumindest die gemeinsamen Verbindungsstellen 23 zwischen dem Korb 9 und den Verbindungsmitteln 18 sind, von oben betrachtet, in Bezug zum Grundriss des Korbes 9 und bezüglich ihrer Lage so gewählt, dass auf das Fahrgestell 3 wahlweise Körbe unterschiedlicher Breite aufsetzbar sind, um ein Einkaufswagensortiment zu bilden. Bevorzugt befinden sich die eben erwähnten Verbindungsstellen 23 innerhalb des Grundrisses des Korbbodens 11. Gleiches lässt sich auch auf die zwischen dem Fahrgestell 3 und den Verbindungsmitteln 18 befindlichen Verbindungsstellen 23 übertragen. Bei allen das Einkaufswagensortiment 1 bildenden Einkaufswagen 2 ist die Gestaltung der Verbindungsmittel 18 und die Anordnung der Verbindungsstellen 23 immer gleich, wobei sowohl der Quersteg 27 als auch das Querstück 31 ebenfalls als mit Verbindungsstellen 23 aufweisende Verbindungmittel 18 betrachtet werden können.

Fig. 11 zeigt schließlich zwei gleiche platzsparend ineinander geschobene Einkaufswagen 2 aus einem Einkaufswagensortiment 1. An jedem Einkaufswagen 2 ist wenigstens ein Verbindungsmittel 18 mit den dazu gehörenden Verbindungsstellen 23 angeordnet. Das wenigstens eine Verbindungsmittel 18 verbindet den Korb 9 mit dem Fahrgestell 3, wie beschrieben. Es sind sowohl die Körbe 9 als auch die Fahrgestelle 3 teilweise ineinander geschoben. Dei Verbindungsmittel 18 beider Einkaufswagen 2 stoßen aneinander an. Die Maße S geben die Länge des sogenannten "Stapelabstandes" an, der dann erreicht ist, wenn die beiden Einkaufswagen 2 nicht mehr weiter ineinander geschoben werden können. Im Beispiel entspricht die Länge eines jeden Verbindungsmittels 18 dem Stapelabstand S. Ergänzend ist das Maß S auch zwischen den Schiebegriffen 10 der beiden Einkaufswagen 2 eingezeichnet, um zu verdeutlichen, dass sich das Maß S an allen gleichen Stellen oder Punkten der beiden Einkaufswagen 2 einstellt.

## Patentansprüche

1. Einkaufswagensortiment (1), gebildet durch wenigstens zwei unterschiedliche Einkaufswagen (2), die jeweils ein Fahrgstell (3) und einen vom Fahrgestell (3) getragenen Korb (9) aufweisen, wobei gleiche Einkaufswagen (2) in Reihen so abstellbar sind, dass sowohl deren Körbe (9) als auch deren Fahrgestelle (3) teilweise ineinander geschoben sind, wobei ferner wenigstens ein unterhalb des Korbbodens (11) und außerhalb der Korbseitenwände (9') befindliches Verbindungsmittel (18) vorgesehen ist, das Verbindungsstellen (23) aufweist, die im Zuge eines Montagevorganges ein ortsfestes Befestigen eine Korbes (9) auf einem Fahrgestell (3) erlauben, **dadurch gekennzeichnet, dass** sich die unterschiedlichen Einkaufswagen (2) zumindest durch die unterschiedliche Breite ihrer Körbe (9) oder alternativ zumindest durch die unterschiedliche Breite ihrer Fahrgestelle (3) unterscheiden und dass die Anordnung wenigstens der mit dem Korb (9) korrespondierenden Verbindungsstellen (23) oder alternativ zumindest der mit dem Fahrgestell (3) korrespondierenden Verbindungsstellen (23) bei allen Einkaufswagen (2) gleich ist.

2. Einkaufswagensortiment nach Anspruch 1, **dadurch gekennzeichnet, dass** die Anordnung des wenigstens einen Verbindungsmittels (18) bei allen Einkaufswagen (2) gleich ist.

3. Einkaufswagensortiment nach Anspruch 1 oder 2, **dadurch gekennzeichnet, dass** das wenigstens eine Verbindungsmittel (18) am Korb (9) und am Fahrgestell (3) entweder ortsfest, oder am Fahrgestell (3) aufsteckbar und am Korb (9) ortsfest, oder am Fahrgestell (3) ortsfest und am Korb (9) aufsteckbar, oder am Fahrgestell (3) und am Korb (9) aufsteckbar angeordnet sind.

4. Einkaufswagensortiment nach Anspruch 1 oder 2, **dadurch gekennzeichnet, dass** das wenigstens eine Verbindungsmittel (18) am Fahrgestell aufsteckbar ist und dass der Korb (9) wiederum auf das wenigstens eine Verbindungsmittel (18) aufsetzbar ist.

5. Einkaufswagensortiment nach Anspruch 1, **dadurch gekennzeichnet, dass** sich die Verbindungsstellen (23) von oben betrachtet innerhalb eines Flächenabschnittes (24) befinden, der entweder schmäler ist als die auf Höhe des Flächenabschnittes (24) gemessene Breite des Korbbodens (11) des jeweiligen Einkaufswagens (2) oder dass sich der die Verbindungsstellen (23) beinhaltende Flächenabschnitt (24), ebenfalls von oben betrachtet, innerhalb der Grundfläche des Korbbodens (11) des jeweiligen Einkaufswagens (2) befindet.

6. Einkaufswagensortiment nach Anspruch 5, **dadurch gekennzeichnet, dass** der Korb (9) der einzelnen Einkaufswagen (2) auf Höhe des Flächenabschnittes (24) entweder breiter oder gleich breit oder schmäler als das Fahrgestell (3) ist.

7. Einkaufswagensortiment nach Anspruch 1 oder 2, **dadurch gekennzeichnet, dass** sich der Korb (9) eines jeden Einkaufswagens (2) mit Hilfe des wenigstens einen Verbindungsmittels (18) rastschlüssig auf das Fahrgestell (3) aufsetzen lässt.

8. Einkaufswagensortiment nach Anspruch 1, **dadurch gekennzeichnet, dass** das wenigstens eine Verbindungsmittel (18) an zwei Querstreben (7) angeordnet oder befestigt ist, welche die Längsholme (6) eines jeden Einkaufswagen (2) verbinden.

9. Einkaufswagensortiment nach Anspruch 1, **dadurch gekennzeichnet, dass** das wenigstens eine Verbindungsmittel (18) zur Bestimmung des Stapelabstandes der Einkaufswagen (2) vorgesehen ist.

10. Einkaufswagensortiment nach Anspruch 1, **dadurch gekennzeichnet, dass** das wenigstens eine Verbindungsmittel (18) mindestens einen Raum (25) zur Aufnahme von wenigstens einem Bauteil aufweist, das imstande ist, die Funktion der Einkaufswagen (2) zu erweitern.

11. Einkaufswagensortiment nach Anspruch 1, **dadurch gekennzeichnet, dass** zwischen der obersten Begrenzung des Fahrgestelles (3) und dem Korbboden (11) ein Abstand gebildet ist.

## Claims

1. Group (1) of shopping trolleys which is formed by at least two different shopping trolleys (2), each of which has a chassis (3) and a basket (9) carried by said chassis (3), wherein identical shopping trolleys (2) can be perked in rows in such a way that both their baskets (9) and their chassis (3) are partially inserted in one another, and also wherein at least one connecting means (18) located underneath the bottom (11) of the basket and outside the sidewalls (9') of the latter is provided, which has connecting points (23) which allow immovable fastening of a basket (9) on a chassis (3) in the course of an assembling operation, **characterised in that** the different shopping trolleys (2) differ at least in the different widths of their baskets (9) or, alternatively, at least in the different widths of their chassis (3), and that the arrangement, at least of the connecting points (23) which correspond with the basket (9) or, alternatively, at least of the connecting points (23) which correspond with the chassis (3), is identical in all the shopping trolleys (2).

2. Group of shopping trolleys according to claim 1, **characterised in that** the arrangement of the at least one connecting means (18) is identical in all the shopping trolleys (2).

3. Group of shopping trolleys according to claim 1 or 2, **characterised in that** the at least one connecting means (18) is arranged in an immovable manner on the basket (9) and on the chassis (3), or so that it can be slipped onto the chassis (3) and is immovable on the basket (9), or so that it is immovable on the chassis (3) and can be slipped onto the basket (9), or so that it can be slipped onto the chassis (3) and onto the basket (9).

4. Group of shopping trolleys according to claim 1 or 2, **characterised in that** the at least one connecting means (18) can be slipped onto the chassis, and that the basket (9) can, in turn, be attached to the at least one connecting means (18).

5. Group of shopping trolleys according to claim 1, **characterised in that** the connecting points (23), viewed from above, are located within a portion (24) of area which is either narrower than the width of the bottom (11) of the basket (9) of the particular shopping trolley (2), measured at the level of said portion (24) of area, or that the portion (24) of area containing the connecting points (23), likewise viewed from above, is located within the base area of the bottom (11) of the basket of the particular shopping trolley (2).

6. Group of shopping trolleys according to claim 5, **characterised in that** the basket (9) of the individual shopping trolleys (2) at the level of the portion (24) of area is wider than, or same width as, or narrower than the chassis (3).

7. Group of shopping trolleys according to claim 1 or 2, **characterised in that** the basket (9) of each shopping trolley (2) can be attached to the chassis (3) by latching-type locking with the aid of at least one connecting means (18).

8. Group of shopping trolleys according to claim 1, **characterised in that** the at least one connecting means (18) is arranged on, or fastened to, two transverse struts (7) which connect the longitudinal spars (6) of each shopping trolley (2).

9. Group of shopping trolleys according to claim 1, **characterised in that** the at least one connecting means (18) is provided for the purpose of determining the stacking distance between the shopping trolleys (2).

10. Group of shopping trolleys according to claim 1, **characterised in that** the at least one connecting means (18) has at least one space (25) for receiving at least one component which is capable of broadening the function of the shopping trolleys (2).

11. Group of shopping trolleys according to claim 1, **characterised in that** a distance is formed between the uppermost boundary of the chassis (3) and the bottom (11) of the basket (9).

## Revendications

1. Ensemble de chariots de supermarché (1) formé d'au moins deux chariots de supermarché différents (2) composés chacun d'un socle (3) et d'une corbeille (9) portée par le socle (3), des chariots identiques pouvant être rangés de telle sorte en files qu'aussi bien leurs corbeilles (9) que leurs socles (3) peuvent pénétrer partiellement les uns dans les autres, au moins un élément de fixation (18) étant en outre prévu en dessous du fond (11) de la corbeille et en dehors des parois latérales (9') de la corbeille, lequel moyen de fixation est muni de points de fixation (23) qui permettent au cours d'une étape de montage une fixation en position de la corbeille (9) sur un socle (3), **caractérisé en ce que** les différents chariots de supermarché (2) se distinguent au moins par la largeur différente de leurs corbeilles (9) ou de façon alternative au moins par la largeur différente de leurs socles (3), et **en ce que** la disposition au moins des points de fixation (23) correspondant à la corbeille (9) ou de façon alternative au moins des points de fixation (23) correspondant au socle (3) est identique pour tous les chariots de supermarché (2).

2. Ensemble de chariots de supermarché selon la revendication 1, **caractérisée en ce que** la disposition du au moins un moyen de fixation (18) est identique pour tous les chariots de supermarché (2).

3. Ensemble de chariots de supermarché selon la revendication 1 ou 2, **caractérisé en ce que** le au moins un moyen de fixation (18) sur la corbeille (9) et sur le socle (3) sont soit fixés en position, soit peuvent être embrochés sur le socle (3) et être fixés en position sur la corbeille (9), soit peuvent être fixés en position sur le socle (3) et être embrochés sur la corbeille (9), soit peuvent être embrochés sur le socle (3) et sur la corbeille (9).

4. Ensemble de chariots de supermarché selon la revendication 1 ou 2, **caractérisé en ce que** le au moins un élément de fixation (18) peut être embroché sur le socle et **en ce que** la corbeille (9) peut être posée à son tour sur le au moins un élément de fixation (18).

5. Ensemble de chariots de supermarché selon la revendication 1, **caractérisé en ce que** les points de fixation (23), observés du dessus, se trouvent à l'intérieur d'une section de surface (24) qui est soit plus mince que la largueur du fond (11) de la corbeille du chariot de supermarché considéré (2) mesurée au niveau de la section de surface (24), ou **en ce que** la section de surface (24) comprenant les points de fixation (23), également observée du dessus, se trouve à l'intérieur de la surface de base du fond de la corbeille (11) du chariot de supermarché considéré.

6. Ensemble de chariots de supermarché selon la revendication 5, **caractérisé en ce que** la corbeille (9) de chacun des chariots de supermarché, au niveau de la section de surface (24), est soit plus large, soit aussi large, soit plus mince que le socle (3).

7. Ensemble de chariots de supermarché selon la revendication 1 ou 2, **caractérisé en ce que** la corbeille (9) de chaque chariot de supermarché (2) peut être placée par encliquetage sur le socle (3) à l'aide du au moins un élément de fixation (18).

8. Ensemble de chariots selon la revendication 1, **caractérisé en ce que** le au moins un élément de fixation (18) est disposé ou fixé sur deux traverses (7) qui relient les deux montants latéraux (6) de chaque chariot de supermarché (2).

9. Ensemble de chariots de supermarché selon la revendication 1, **caractérisé en ce que** le au moins un élément de fixation (18) est prévu pour déterminer la distance d'empilement des chariots de supermarché (2).

10. Ensemble de chariots de supermarché selon la revendication 1, **caractérisé en ce que** le au moins un élément de fixation (18) présente au moins un espace (25) pour recevoir au moins un élément de construction apte à élargir la fonction du chariot de supermarché (2).

11. Ensemble de chariots de supermarché selon la revendication 1, **caractérisé en ce qu'**une distance est réalisée entre la limite supérieure du socle (3) et le fond (11) de la corbeille.
